# EUROPÄISCHE PATENTSCHRIFT

(11) **EP 1 292 784 B1**
(45) Veröffentlichungstag und Bekanntmachung des Hinweises auf die Patenterteilung: **24.09.2008**
(21) Anmeldenummer: 02750792.0
(22) Anmeldetag: 19.06.2002
(51) Int. Cl.: F16H 61/22

(54) **VER- UND ENTRIEGELUNGSMECHANISMUS MIT ELEKTROMAGNET**
LOCKING AND UNLOCKING MECHANISM COMPRISING A SOLENOID
MECANISME DE VERROUILLAGE ET DE DEVERROUILLAGE A ELECTROAIMANT

(30) Priorität: 26.06.2001 DE 10130335
(43) Veröffentlichungstag der Anmeldung: 19.03.2003
(73) Patentinhaber: ZF Lemförder Metallwaren AG, 49441 Lemförde (DE)
(72) Erfinder: KLIEMANNEL, Wolfgang, 49448 Lemförde (DE)
(86) Internationale Anmeldenummer: PCT/DE2002/002221
(87) Internationale Veröffentlichungsnummer: WO 2003/002895

(56) Entgegenhaltungen:
- DE-A- 19 752 752
- DE-A- 19 825 479
- US-A- 5 445 575
- US-A- 6 059 687

## Beschreibung

Die Erfindung betrifft einen mit einem Elektromagneten ausgestatteten Ver- und Entriegelungsmechanismus, welcher vorzugsweise zur Realisierung einer Key- und/oder Shiftlock-Funktion in Kraftfahrzeugen dient.

Für unterschiedlichste Einsatzzwecke werden Mechanismen benötigt, welche in Abhängigkeit vorgegebener Zustände eines Systems bestimmte mechanische Elemente für eine manuelle Betätigung durch einen Benutzer sperren oder freigeben. Ein typischer Anwendungsfall für solche Mechanismen ist durch die Key- und/oder Shiftlock-Funktion in einem Kraftfahrzeug mit automatischer Schaltung gegeben. Aufgabe des Ver- und Entriegelungsmechanismus ist es dabei, die Betätigung des Wählhebels, insbesondere das Schalten aus der Position "Parken" in die Rückwärtsfahrstellung oder in die Position "Drive", beispielsweise nur bei einer bestimmten Stellung des Zündschlüssels im Zündschloss oder bei getretener Bremse zu ermöglichen. Derartige Ver- und Entriegelungsmechanismen werden unter Einsatz eines Elektromagneten realisiert, der in Abhängigkeit von dem gewünschten Verhalten (Ver- oder Entriegeln) bei entsprechenden Positionen des Zündschlüssels und/oder Betätigungszuständen des Bremspedals bestromt wird.

Ein Beispiel für einen solchen Verriegelungsmechanismus ist aus der DE 198 25 479 A1 bekannt. Der Mechanismus umfasst im Wesentlichen eine mit dem Wählhebel schwenkbare Sperrplatte, einen am Wählhebelgehäuse befestigten Elektromagneten und einen auf der Sperrplatte angeordneten Dauermagneten. Mittels der Sperrplatte wird über eine Entriegelungszunge ein Sperrstift, welcher in Ausnehmungen der Schaltkulisse eingreift, für das Herausbewegen aus diesen Ausnehmungen gesperrt oder freigegeben.

Bei der in der Schrift beschriebenen Vorrichtung wird der Elektromagnet im unbestromten Zustand von dem Dauermagnet angezogen und dadurch der Dauermagnet zusammen mit der Sperrplatte am Elektromagnet festgehalten. Hierdurch wird der Sperrstift vermittels einer Entriegelungszunge der Sperrplatte gegen das Herausbewegen aus einer Ausnehmung der Schaltkulisse gesperrt. Wird, beispielsweise durch Betätigung des Bremspedals, der Elektromagnet am Wählhebelgehäuse bestromt, so baut er ein Magnetfeld auf, durch welches der an ihm anliegende Dauermagnet mit der Sperrplatte abgestoßen sowie der Sperrstift von der Entriegelungszunge der Sperrplatte freigegeben wird.

Der Ganghebel kann nun bei entsprechender Betätigung durch den Nutzer aus der Stellung Parken in eine Fahrstellung gebracht werden. Das Anziehen und Abstoßen des Dauermagneten durch den Elektromagneten ist mit einer unerwünschten Geräuschbildung verbunden. Der Geräuschpegel ist dabei zusätzlich von der jeweiligen tatsächlichen Bordspannung, welche in der Regel zwischen 9 und 16 V schwankt, abhängig. Eine Möglichkeit, zumindest die Auswirkungen eventueller Bordnetzschwankungen zu unterbinden und dabei gleichzeitig den Geräuschpegel zu minimieren, besteht darin, den Elektromagneten mit einem gleichspannungsbewerteten Pulsbreitensignal zu beaufschlagen. Im Falle der Bestromung des Elektromagneten wird dabei auf diesen eine pulsierende Spannung (PWM-Spannung; PWM = engl.: Puls Width Modulation) mit konstantem Effektivwert, vorzugsweise 9 V, durchgeschaltet.

Aus der US 5 445 575 ist ein Verriegelungsmechanismus nach dem Oberbegriff des Anspruchs 1 bekannt.

Etwaige pannungsschwankungen im Bordnetz werden durch den die PWM-Spannung bereitstellenden Pulsbreitenmodulator lediglich in Form veränderter Pulsbreiten des den Elektromagneten zugeführten Pulsbreitensignals umgesetzt. Trotz der sich hierdurch ergebenden Geräuschverminderung wird das beim Ver- und Entriegeln nach wie vor auftretende Geräusch, beispielsweise verursacht durch das Zusammenprallen des Elektromagneten mit Metallteilen oder einem Dauermagneten, teilweise immer noch als störend empfunden.

Aufgabe der Erfindung ist es, einen Ver- und Entriegelungsmechanismus auszubilden, durch welchen die Geräuschentwicklung beim Übergang von einem Zustand in den anderen weiter verringert wird, so dass etwaige Geräusche praktisch nicht mehr wahrgenommen werden.

Die Aufgabe wird durch einen Ver- und Entriegelungsmechanismus mit den Merkmalen des Hauptanspruchs gelöst. Vorteilhafte Ausgestaltungen bzw. Weiterbildungen der Erfindung sind durch die Unteransprüche gegeben. Der Ver- und Entriegelungsmechanismus, welcher vorzugsweise zur Realisierung einer Key- und/oder Shiftlock-Funktion in einem Kraftfahrzeug dient, basiert in an sich bekannter Weise darauf, dass mechanische Elemente in Abhängigkeit vorgegebener Zustände für eine manuelle Betätigung gesperrt oder freigegeben werden und dieses durch die Bestromung eines Elektromagneten erfolgt. Bei der Bestromung des Elektromagneten werden durch das dabei aufgebaute Magnetfeld metallische Teile angezogen und festgehalten oder mindestens ein Dauermagnet abgestoßen. Zur Bestromung des Elektromagneten wird eine pulsierende elektrische Spannung als gleichspannungsbewertetes Pulsbreitensignal (PWM-Spannung) verwendet. Erfindungsgemäß wird jedoch eine dem Pulsbreitenmodulator zugeordnete Schaltungseinheit vorgesehen, welche den Effektivwert der PWM-Spannung zeitgesteuert zum Beginn einer Bestromungsphase über wenigstens drei Spannungsimpulse von einem Ruhespannungswert auf einen vorgegebenen Endspannungswert erhöht. In umgekehrter Weise fällt zum Ende der Bestromungsphase der Effektivwert der PWM-Spannung wiederum über wenigstens drei Spannungsimpulse auf einen zum Anziehen metallischer Teile oder zum Abstoßen des oder der Permanentmagneten nicht mehr hinreichenden Ruhespannungswert ab.

Die drei Spannungsimpulse beim Anstieg des Effektivwertes umfassen auch den letzten Ruhespannungsimpuls vor der Erhöhung des Effektivwertes und den ersten Endspannungsimpuls nach diesem letzten Ruhespannungsimpuls. Ferner umfassen die drei Spannungsimpulse beim Abfall des Effektivwertes den letzten Endspannungsimpuls vor dem Abfall des Effektivwertes und den ersten Ruhespannungsimpuls nach diesem letzten Endspannungsimpuls.

Der Anstieg bzw. der Abfall des Effektivwertes der PWM-Spannung erfolgt dabei mit wenigstens drei unterschiedlichen Spannungswerten, wobei die Steuerung des Effektivwertes über die Variation des Tastverhältnisses der PWM-Spannung mittels der Schaltungseinheit realisiert wird. Als Spannungswerte beim Anstieg bzw. beim Abfall des Effektivwertes werden auch der Ruhespannungswert und der Endspannungswert mitgezählt, so dass wenigstens ein Spannungswert der unterschiedlichen Spannungswerte zwischen dem Ruhespannungswert und dem Endspannungswert liegt.

Der einen quadratischen Mittelwert bildende Effektivwert betrifft hier immer nur die jeweilig zu betrachtende Periode, wobei sich eine Periodendauer aus der Zeitspanne ergibt, die zwischen dem Beginn eines Impulses und dem Beginn des darauffolgenden Impulses verstreicht. Wenn sich das Tastverhältnis von einer Periode zur anderen ändert, so ändert sich in Abhängigkeit davon auch der Effektivwert.

Bevorzugt ist zu Beginn des Anstiegs der Betrag der Änderung des Effektivwertes zwischen zwei aufeinanderfolgenden Impulsen größer als gegen Ende des Spannungsanstiegs. Ferner ist zu Beginn des Spannungsabfalls der Betrag der Änderung des Effektivwertes zwischen zwei aufeinanderfolgenden Impulsen größer als gegen Ende des Spannungsabfalls.

Ein in dieser Weise konzipierter Ver- und Entriegelungsmechanismus ist selbstverständlich nicht nur im Zusammenhang mit der Realisierung der Key- und/oder Shiftlock-Funktion in einem Kraftfahrzeug einsetzbar. Vielmehr lässt sich das erfinderische Prinzip ohne weiteres auf eine Vielzahl von Anwendungsfällen übertragen. Insoweit stellt die im folgenden vornehmlich auf die Anwendung im Kraftfahrzeug bezogene Beschreibung keine Beschränkung des Erfindungsgegenstandes dar.

Entsprechend einer praxisgerechten Ausbildung des Ver- und Entriegelungsmechanismus steigt der Effektivwert der PWM-Spannung zum Beginn der Bestromungsphase des Elektromagneten exponentiell degressiv an, während er zum Ende der Bestromungsphase exponentiell degressiv abfällt. Die Zeitkonstante für das Erreichen der vorgegebenen Effektivspannung bei der Bestromung bzw. für das Erreichen der Ruhespannung bei einer Unterbrechung der Bestromung ist dabei an der dem Pulsbreitenmodulator unmittelbar zugeordneten Schaltungseinheit einstellbar. Bei dieser Schaltungseinheit kann es sich um einen Timer oder, einer möglichen Ausbildung der Erfindung zufolge, um ein RC-Netzwerk handeln, dessen Zeitkonstante die Verzögerung beim Anstieg oder Abfall des Effektivwertes der PWM-Spannung bestimmt. Die Steuerung des zeitlichen Verlaufs des Effektivwertes der PWM-Spannung kann aber auch mittels einer von einem Mikrocontroller abgearbeiteten Software erfolgen, selbst wenn dieser außerdem andere Aufgaben in einem komplexeren System verfüllt.

In einer Ausbildungsform dient der erfindungsgemäße Ver- und Entriegelungsmechanismus der Realisierung einer Shinlock-Funktion zur Sperrung und Freigabe der Betätigung des Wählhebels einer Automatikschaltung in einem Kraftfahrzeug. Das Sperren des Wählhebels wird entsprechend einer möglichen Variante durch das magnetische Festhalten einer Sperrplatte mit einem daran befestigten Dauermagneten vermittels eines am Wählhebelgehäuse angeordneten Elektromagneten bewirkt. Durch das Festhalten der Sperrplatte wird dabei ein mit dem Schalthebel verbundener Sperrstift daran gehindert, sich aus einer Ausnehmung bzw. Rastposition der Schaltkulisse herauszubewegen. Der Wählhebel wird folglich gesperrt, wenn der Elektromagnet unbestromt ist und von dem Dauermagneten angezogen wird. Eine andere Möglichkeit besteht darin, dass bei bestromtem Elektromagneten eine Klinke in eine Ausnehmung eines Sperrelementes in Form eines mit dem Wählhebel in Wirkverbindung stehenden Seilhebels eingreift, während die Klinke im unbestromten Zustand des Elektromagneten den Seilhebel und damit den Wählhebel freigibt.

Bei der zum Einsatz als Shiftlock-Mechanismus in einem Kraftfahrzeug geeigneten Ausbildungsform beträgt der Effektivwert der PWM-Spannung bei der Bestromung des Elektromagneten vorzugsweise 9 V. Die Ruhespannung beträgt 0 V, so dass der Elektromagnet bei Ruhespannung überhaupt nicht bestromt wird. Dem erfinderischen Grundprinzip zur Folge wird dabei der Effektivwert der in der Bestromungsphase am Elektromagneten anliegenden Spannung mit einsetzender Bestromung allmählich auf den Endwert von 9 V erhöht. Im Hinblick auf die gemäß einer bevorzugten Ausführungsform vorgesehene exponentiell degressive Erhöhung des Effektivwertes der Spannung erfolgt zunächst eine rasche Erhöhung des Spannungswertes auf einen den Übergang in den jeweils anderen Zustand (von "Freigeben" zu "Sperren" oder "Sperren" zu "Freigeben" - je nach mechanischer Umsetzung der mittels des Elektromagneten bewegten Teile) noch nicht ermöglichenden Spannungswert. Hingegen erfolgt im Bereich des Wirksamwerdens der Effektivspannung, im Hinblick auf die Einnahme des anderen, bei Bestromung des Elektromagneten vorgesehenen Zustandes, nur noch eine vergleichsweise langsame Erhöhung des Effektivwertes. Hierdurch verlangsamt sich das Anziehen eines metallischen Elementes oder das Abstoßen eines Dauermagneten durch den Elektromagneten in der Weise, dass ein hörbares Aufeinanderschlagen von Elementen des Verriegelungsmechanismus nahezu unterbleibt. Zumindest wird der Geräuschpegel gegenüber den bisher bekannten Lösungen deutlich reduziert.

Die Erfindung soll nachfolgend anhand eines Ausführungsbeispieles näher erläutert werden. In den zugehörigen Zeichnungen zeigen:
- Fig. 1:: Ein Blockschaltbild für die Ansteuerung eines Key- bzw. Shiftlock-Magneten in einem Kraftfahrzeug;
- Fig. 2:: Eine zur Fig. 1 vergleichbare Schaltungsanordnung nach dem Stand der Technik;
- Fig. 3a, 3b:: Die mechanische Umsetzung im Zusammenhang mit einer Shiftlock-Funktion für den Wählhebel einer Automatikschaltung.

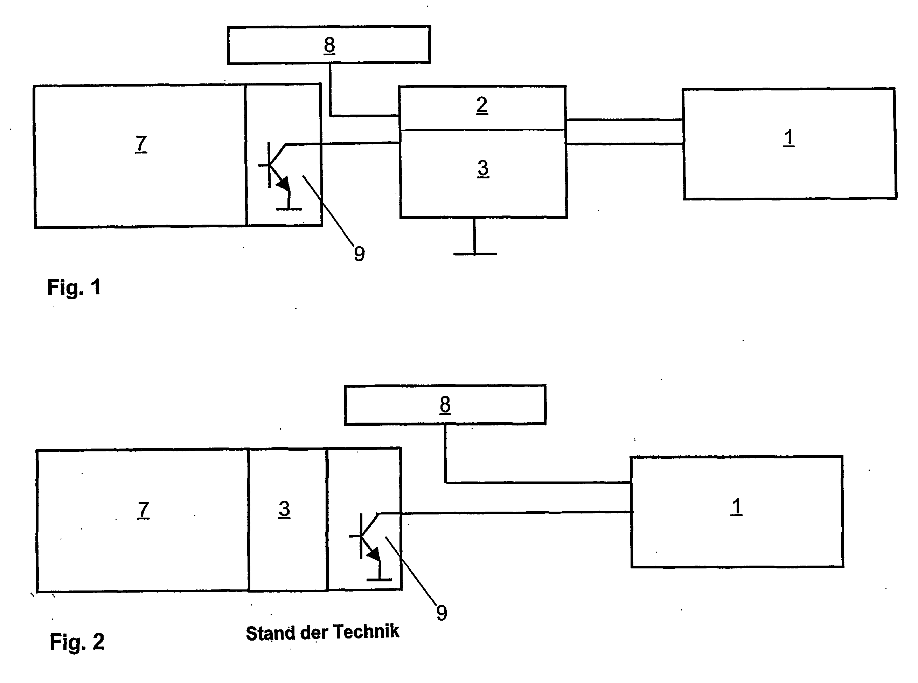

Durch die Fig. 1 wird die Erfindung in Form eines Blockschaltbildes, welches die Ansteuerung des Elektromagneten 1 des Ver- und Entriegelungsmechanismus betrifft, nochmals am Beispiel ihres Einsatzes in einem Kraftfahrzeug verdeutlicht. Durch fahrzeugseitige Schaltungseinheiten 7, wie Getriebesteuergerät u. dgl., wird die Ansteuerung des Shiftlock-Magneten (Elektromagnet 1) in Abhängigkeit vorgegebener Zustände bewirkt. Das entsprechende Steuersignal wird dazu einem Pulsbreitenmodulator 3 zugeführt. Dem Pulsbreitenmodulator 3 ist dem Grundgedanken der Erfindung folgend, eine Schaltungseinheit 2 (in Form eines Timers oder eines RC-Netzwerks) zugeordnet, durch welche das Tastverhältnis und somit auch der Effektivwert der vom Pulsbreitenmodulator 3 abgegebenen PWM-Spannung im Falle der Bestromung des Elektromagneten 1 über wenigstens drei Spannungsimpulse auf den Maximalwert (vorzugsweise 9 V) erhöht wird. Bei Beendigung der Bestromungsphase bewirkt die gleiche Schaltungsanordnung eine Verringerung des Tastverhältnisses und somit auch ein Abfallen des Effektivwertes der PWM-Spannung über wenigstens drei Spannungsimpulse auf 0 V. Die mechanischen Teile des Ver- und Entriegelungsmechanismus bewegen sich entsprechend der geringeren zeitlichen Veränderung des Effektivwertes der PWM-Spannung langsamer. Somit wird das klackende Geräusch, welches beispielsweise durch das Anschlagen eines vom Elektromagneten angezogenen Metallteils (oder eines Dauermagneten bei Abschalten der Bestromung) verursacht wird, weitestgehend vermieden. Die Bestromung des Shiftlock-Magneten 1 erfolgt gemäß des dargestellten Prinzipschaltbilds über entsprechende Klemmen 8 der Fahrzeugelektrik, den von der Schaltungseinheit 2 (zeit-) gesteuerten Pulsbreitenmodulator 3 und eine der Signalverstärkung dienende Treiberendstufe 9. Je nach Ausführung der Schaltung kann die Treiberstufe 9 auch dem Pulsbreitenmodulator 3 vorgeschaltet sein.

In der Fig. 2 ist ein mit der Fig. 1 vergleichbares Prinzipschaltbild zur Ansteuerung des Elektromagneten 1 entsprechend einer aus dem Stand der Technik bekannten Ausführungsform angegeben. Der Elektromagnet 1 wird zwar zur Verhinderung nachteiliger Auswirkungen von im Bordnetz auftretenden Spannungsschwankungen über einen Pulsbreitenmodulator 3 angesteuert. Anders als bei der Erfindung wird jedoch der entsprechende Effektivwert der pulsbreitenmodulierten Spannung unmittelbar abrupt mit dem Auftreten eines entsprechenden Systemzustandes (beispielsweise Betätigung des Bremspedals) auf den Elektromagneten 1 durchgeschaltet. Der Ver- und Entriegelungsmechanismus nimmt somit schlagartig den jeweils anderen Zustand ein. Zwar wird durch das Verwenden einer PWM-Spannung eine gewisse Verringerung der Geräuschpegel erzielt, jedoch entstehen durch das schlagartige Umschalten immer noch Geräusche mit einem vergleichsweise hohen Lautstärkepegel, welche zumindest im Einzelfall als störend empfunden werden.

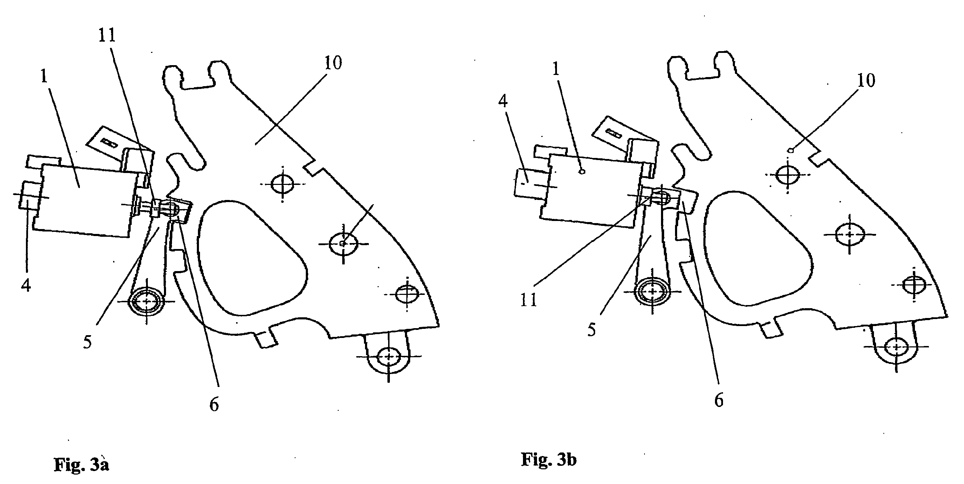

In den Figuren 3a und 3b ist der Einsatz des Ver- und Entriegelungsmechanismus im Zusammenhang mit der Sperrung und Freigabe des Wählhebels einer Automatikschaltung in der mechanischen Umsetzung der durch die jeweilige Ansteuerung des Elektromagneten 1 gegebenen magnetischen Zustände wiedergegeben. Durch den Elektromagneten 1 wird ein Verriegelungselement 5 in Form einer Klinke betätigt, welche in Abhängigkeit des Bestromungszustandes des Elektromagneten 1 in die Ausnehmung 6 eines in Wirkverbindung mit dem Wählhebel stehenden Seilhebels 10 eingreift oder sich aus dieser herausbewegt.

In der Fig. 3a ist der Seilhebel 10, und damit der Gangwählhebel, infolge des Eingreifens des Verriegelungselementes 5 in die Ausnehmung 6 gesperrt. Dieser Zustand ergibt sich bei eingeschalteter Zündung und nicht betätigtem Bremspedal. Der bestromte, als Hohlzylinder (Spule) ausgebildete Elektromagnet 1 zieht dabei ein metallisches Teil 4, nämlich einen Eisenkern, an, so dass dieser sich gegen die Federkraft einer im Inneren des Elektromagneten 1 eingeordneten (nicht dargestellten) Feder von links nach rechts in den Elektromagneten hinein bewegt und einen mit ihm verbundenen Stößel 11 nach rechts herausschiebt. Durch den Stößel 11 wird dabei gleichzeitig das klinkenförmige Verriegelungselement 5 in die Ausnehmung 6 gedrückt und hierdurch der Seilhebel 10 gesperrt. Wird nun beispielsweise das Bremspedal betätigt, so wird durch die in der Fig. 1 dargestellte fahrzeugseitige Steuerelektronik 7 die Bestromung des Elektromagneten 1 unterbrochen. Allerdings erfolgt dies im Sinne der Erfindung nicht abrupt, sondern, veranlasst durch die Schaltungseinheit 2, in Form eines allmählichen Abfallens des Effektivwertes der zur Ansteuerung des Elektromagneten 1 dienenden PWM-Spannung auf den Ruhewert (0 V). Der Eisenkern 4 wird, wie aus Figur 3b ersichtlich, durch die Rückstellkraft der oben erwähnten Feder wieder etwas nach links aus dem Elektromagneten herausgeschoben und damit der Stößel 11 zurückgezogen sowie das Verriegelungselement 5 aus der Ausnehmung 6 des Seilhebels 10 herausbewegt. Der nicht dargestellte Gangwählhebel kann nun durch den Fahrer aus der Parkstellung in eine Fahrstellung bewegt werden.

### Bezugszeichenliste

- 1: Elektromagnet (Shiftlock-Magnet)
- 2: Schaltungseinheit
- 3: Pulsbreitenmodulator
- 4: metallisches Teil, (Eisenkern)
- 5: Vernegelungselement
- 6: Ausnehmung
- 7: fahrzeugseitige Schaltungseinheiten (Steuerelektronik)
- 8: Klemmen
- 9: Treiberendstufe
- 10: Seilhebel
- 11: Stößel

## Patentansprüche

1. Ver- und Entriegelungsmechanismus zur Realisierung einer Key- und/oder Shiftlock-Funktion zur Sperrung und Freigabe der Betätigung des Wählhebels einer Automatikschaltung in einem Kraftfahrzeug, mit einem Verrigelungselement (5) und einer Ausnehmung oder Rastposition (6), in welcher das Verriegelungselement (5) den Wählhebel sperrt oder frei gibt indem es den Wählhebel durch Eingreifen in der genannten Ausnehmung oder Rastposition (6) sperrt, einem Elektromagneten (1), metallischen Teilen (4), **gekennzeichnet durch** einen Pulsbreitenmodulator (3), der zur Bestromung des Elektromagneten (1) eine pulsierende elektrische Spannung als gleichspannungsbewertetes Pulsbreitensignal (PWM-Spannung) auf den Elektromagneten (1) durchschaltet, und eine dem Pulsbreitenmodulator (3) zugeordnete Schaltungseinheit (2), welche den Effektivwert der Spannung zeitgesteuert zum Beginn einer Bestromungsphase über wenigstens drei Spannungsimpulse von einem Ruhespannungswert auf einen vorgegebenen Endspannungswert erhöht und zum Ende einer Bestromungsphase über wenigstens drei Spannungsimpulse auf den zum Anziehen der metallischen Teile (4) oder zum Abstoßen des oder der Permanentmagneten nicht mehr hinreichenden Ruhespannungswert absenkt.

2. Ver- und Entriegelungsmechanismus nach Anspruch 1, **dadurch gekennzeichnet, dass** die Schaltungseinheit (2) derart ausgebildet ist, dass der Effektivwert der PWM-Spannung zum Beginn der Bestromungsphase des Elektromagneten (1) exponentiell degressiv ansteigt und zum Ende der Be-,trumungiphase exponentiell degressiv abfällt, wobei die Zeitkonstante für das Erreichen des vorgegebenen Endspannungswertes bzw. des Ruhespannungswertes einstellbar ist.

3. Ver- und Entriegelungsmechanismus nach Anspruch 1 oder 2, **dadurch gekennzeichnet, dass** es sich bei der Schaltungseinheit (2) um ein RC-Netzwerk handelt, durch dessen Zeitkonstante die Dauer für den Anstieg und die Dauer für den Abfall des Effektivwertes der PWM-Spannung bestimmt wird.

4. Ver- und Entriegelungsmechanismus nach Anspruch 1 oder 2, **dadurch gekennzeichnet, dass** es sich bei der Schaltungseinheit (2) um einen gegebenenfalls gleichzeitig andere Aufgaben erfüllenden Mikrocontroller handelt und der zeitliche Verlauf des Effektivwertes der PWM-Spannung durch ein von dem Mikrocontroller abgearbeitetes Programm bestimmt wird.

5. Ver- und Entriegelungsmechanismus nach Anspruch 1, mit Shiftlock-Funktion zur Sperrung und Freigabe der Betätigung des Wählhebels einer Automatikschaltung in einem Kraftfahrzeug, bei welchem das Sperren oder die Freigabe des Wählhebels mittels eines Verriegelungselementes (5) erfolgt, welches den Wählhebel bei bestromtem Elektromagneten (1) durch Eingreifen in eine hierfür vorgesehene Ausnehmung oder Rastposition (6) sperrt.

6. Ver- und Entriegelungsmechanismus nach Anspruch 1, mit Shiftlock-Funktion zur Sperrung und Freigabe der Betätigung des Wählhebels einer Automatikschaltung in einem Kraftfahrzeug, bei welchem das Sperren oder die Freigabe des Wählhebels mittels eines Verriegelungselementes (5) erfolgt, welches bei unbestromtem Elektromagneten (1) am Herausgleiten aus einer hierfür vorgesehenen Ausnehmung oder Rastposition (6) gehindert wird.

7. Ver- und Entriegelungsmechanismus nach Anspruch 5 oder 6, **dadurch gekennzeichnet, dass** der Effektivwert der PWM-Spannung zu Beginn der Bestromungsphase des Elektromagneten (1) auf einen Endwert von 9 V erhöht wird und bei Beendigung der Bestromung auf 0 V abfällt.

## Claims

1. Locking and unlocking mechanism for realizing a key- and/or shiftlock function for disabling and enabling the actuation of the selector lever of an automatic gear selector in a motor vehicle, comprising a locking element (5) and a recess or detent position (6), in which the locking element (5) disables or enables the selector lever by blocking the selector lever through engagement in the said recess or detent position (6), an electromagnet (1), metal parts (4), **characterized by** a pulse-width modulator (3), which for energizing the electromagnet (1) switches through a pulsating voltage as a direct-voltage-weighted pulse-width signal (PWM voltage) to the electromagnet (1), and by a gear selector unit (2), which is associated with the pulse-width modulator (3) and by means of which the root-mean-square value of the voltage in a time-controlled manner is increased at the start of an energizing phase over at least three voltage pulses from a static voltage value to a defined final voltage value and is lowered at the end of an energizing phase over at least three voltage pulses to the static voltage value that is no longer sufficient to attract the metal parts (4) or to repel the permanent magnet or magnets.

2. Locking and unlocking mechanism according to claim 1, **characterized in that** the gear selector unit (2) is designed in such a way that the root-mean-square value of the PWM voltage at the start of the energizing phase of the electromagnet (1) exponentially degressively rises and at the end of the energizing phase exponentially degressively falls, wherein the time constant for reaching the defined final voltage value and/or static voltage value is adjustable.

3. Locking and unlocking mechanism according to claim 1 or 2, **characterized in that** the gear selector unit (2) is an RC network, the time constant of which determines the duration of the rise and the duration of the fall of the root-mean-square value of the PWM voltage.

4. Locking and unlocking mechanism according to claim 1 or 2, **characterized in that** the gear selector unit (2) is a microcontroller, which optionally simultaneously fulfils other tasks, and the time characteristic of the root-mean-square value of the PWM voltage is determined by a program operated by the microcontroller.

5. Locking and unlocking mechanism according to claim 1, with shiftlock function for disabling and enabling the actuation of the selector lever of an automatic gear selector in a motor vehicle, in which the disabling or the enabling of the selector lever is effected by means of a locking element (5) that blocks the selector lever in the energized state of the electromagnet (1) through engagement into a specially provided recess or detent position (6).

6. Locking and unlocking mechanism according to claim 1, with shiftlock function for disabling and enabling the actuation of the selector lever of an automatic gear selector in a motor vehicle, in which the disabling or the enabling of the selector lever is effected by means of a locking element (5), which in the non-energized state of the electromagnet (1) is prevented from sliding out of a specially provided recess or detent position (6).

7. Locking and unlocking mechanism according to claim 5 or 6, **characterized in that** the root-mean-square value of the PWM voltage at the start of the energizing phase of the electromagnet (1) is increased to a final value of 9 V and on completion of the energization falls to 0 V.

## Revendications

1. Mécanisme de verrouillage et de déverrouillage destiné à réaliser une fonction de blocage par clé et/ou de blocage de commutation (fonction *key-*/ *shiftlock*) afin de bloquer et débloquer un levier sélecteur d'un système de commutation automatique dans un véhicule automobile, comprenant un élément de verrouillage (5) et un évidement ou une position d'arrêt (6), dans lequel/laquelle l'élément de verrouillage (5) bloque ou débloque le levier sélecteur en verrouillant le levier sélecteur par engagement dans l'évidement ou la position d'arrêt (6) mentionnés, et un électro-aimant (1) et des pièces métalliques (4),
**caractérisé par**
un modulateur de durée d'impulsion (3), qui, en vue d'alimenter l'électro-aimant (1), retransmet à l'électro-aimant (1) une tension électrique pulsée se présentant sous forme d'un signal de durée d'impulsion calibrée de tension continue (tension PWM), et par une unité de commande (2) associée au modulateur de durée d'impulsion (3), qui, au début de la phase d'alimentation électrique, augmente la valeur réelle de la tension en fonction du temps, sur au moins trois impulsions de tension électrique, depuis une valeur de tension de repos jusqu'à une valeur prédéfinie de tension finale, et la diminue à la fin de la phase d'alimentation électrique, sur au moins trois impulsions de tension électrique, jusqu'à la valeur de tension de repos insuffisante pour attirer les éléments métalliques (4) ou pour repousser le ou les aimant(s) permanent(s).

2. Mécanisme de verrouillage et de déverrouillage selon la revendication 1,
**caractérisé en ce que**
l'unité de commande (2) est configurée de telle sorte que la valeur réelle de la tension PWM, au début de la phase d'alimentation électrique de l'électro-aimant (1) augmente de façon exponentiellement décroissante, et qu'à la fin de la phase alimentation électrique, elle diminue de façon exponentiellement décroissante, la constante de temps pour atteindre la valeur de tension finale prédéfinie, voire la valeur de tension finale, étant réglable.

3. Mécanisme de verrouillage et de déverrouillage selon la revendication 1 ou 2,
**caractérisé en ce que**
dans le cas de l'unité de commande (2), il s'agit d'un réseau RC dont la constante de temps détermine la durée de la montée et la durée de la diminution des valeurs réelles de la tension PWM.

4. Mécanisme de verrouillage et de déverrouillage selon la revendication 1 ou 2,
**caractérisé en ce que**
dans le cas de l'unité de commande (2), il s'agit d'un micro-contrôleur remplissant, le cas échéant, d'autres tâches aussi, et que l'évolution de la valeur réelle de la tension PWM dans le temps est déterminée par un programme exécuté par le micro-contrôleur.

5. Mécanisme de verrouillage et de déverrouillage selon la revendication 1, ayant une fonction de blocage de commutation (*shiftlock*) pour bloquer et débloquer le levier sélecteur d'un dispositif de commutation automatique dans un véhicule automobile,
où le blocage ou le déblocage du levier sélecteur s'effectuent par l'intermédiaire d'un élément de verrouillage (5), qui bloque le levier sélecteur lorsque l'électro-aimant (1) est alimenté en courant, en s'engageant dans un évidement ou une position d'arrêt (6) prévu(e) à cet effet.

6. Mécanisme de verrouillage et de déverrouillage selon la revendication 1, ayant une fonction de blocage de commutation (*shiftlock*) pour bloquer et débloquer le levier sélecteur d'un dispositif de commutation automatique dans un véhicule automobile,
où le blocage ou le déblocage du levier sélecteur s'effectuent par l'intermédiaire d'un élément de verrouillage (5), qui est empêché de ressortir d'un évidement ou d'une position d'arrêt (6) prévu(e) à cet effet, lorsque l'électro-aimant (1) n'est pas alimenté en courant.

7. Mécanisme de verrouillage et de déverrouillage selon la revendication 5 ou 6,
**caractérisé en ce que**
la valeur réelle de la tension PWM, au début de la phase d'alimentation électrique de l'électro-aimant (1), est augmentée jusqu'à une valeur finale de 9 V et retombe à 0 V à la fin de l'alimentation électrique.
